# EUROPÄISCHE PATENTSCHRIFT

(11) **EP 0 983 968 B1**
(45) Veröffentlichungstag und Bekanntmachung des Hinweises auf die Patenterteilung: **15.12.2010**
(21) Anmeldenummer: 99250308.6
(22) Anmeldetag: 03.09.1999
(51) Int. Cl.: C02F 1/36, C02F 11/12, C02F 3/34, C02F 3/30

(54) **Verfahren zur Behandlung von biologischen Abfällen**
Process for treating wastes of biological origin
Procédé de traitement des résidus d'origine biologique

(30) Priorität: 04.09.1998 DE 19842005
(43) Veröffentlichungstag der Anmeldung: 08.03.2000
(73) Patentinhaber: Fraunhofer-Gesellschaft zur Förderung der angewandten Forschung e.V., 80686 München (DE); Dr. Hielscher GmbH, 14513 Teltow (DE); IWE- Ingenieurgesellschaft für Wasser und Entsorgung mbH, 01445 Radebeul (DE)
(72) Erfinder: Friedrich, Hannelore, Dr., 01445 Radebeul (DE); Gerlach, Udo, Dr., 01827 Birkwitz (DE); Friedrich, Eberhard, Dr., 01445 Radebeul (DE); Jobst, Karin, Dr., 01445 Radebeul (DE); Potthoff, Annegret, 01187 Dresden (DE); Hielscher, Harald, Dr., 14532 Stahnsdorf (DE)
(74) Vertreter: Hengelhaupt, Jürgen

(56) Entgegenhaltungen:
- EP-A- 0 808 803
- WO-A-99/41205
- US-A- 4 200 524
- US-A- 5 068 036
- PATENT ABSTRACTS OF JAPAN vol. 1999, no. 10, 31. August 1999 (1999-08-31) & JP 11 128975 A (EBARA CORP), 18. Mai 1999 (1999-05-18)

## Beschreibung

Die Erfindung betrifft ein Verfahren zur Behandlung von biologischen Abfällen, die lebende Mikroorganismen enthalten, gemäß den Oberbegriffen des Anspruchs 1.

Es sind bereits eine Vielzahl von Verfahren und Vorrichtungen zur Behandlung von biologischen Abfällen wie Klärschlamm mit dem Ziel der Reduzierung des Anfalls und der Kosten für die Entsorgung bekannt.

Die mechanische Zerkleinerung oder die Desintegration von Klärschlämmen mittels Ultraschall zur Verbesserung der biologischen Abbauvorgänge der Abwasser- und Schlammbehandlung infolge der Zerstörung des organischen Materials und des Aufschlusses der im Schlamm vorhandenen Mikroorganismen ist dabei eine der untersuchten Möglichkeiten.

In der DE 195 17 381 C1 wird eine Einrichtung zum Zerstören zellulärer Strukturen in Suspensionen von Mikroorganismen, insbesondere in Schlämmen biologischer Kläranlagen, durch Ultraschallbeaufschlagung vorgeschlagen. Es wird ein Reaktor beschrieben, durch den das zu behandelnde Medium geführt wird. In dem Reaktor sollen Agglomerate von im Schlamm befindlicher Biomasse auseinandergerissen werden, wobei die in der Nähe des stabförmigen Ultraschallgebers befindlichen Mikroben aufgeschlossen, d.h. mechanisch zerstört, die weiter entfernt befindlichen Mikroben dagegen zum Wachstum angeregt werden sollen. Der Vorgang kann mehrere Male wiederholt werden, um den Anteil an Biomasse im Schlamm und damit die Menge an Schlamm, der auf herkömmliche Weise kostspielig zu entsorgen ist, weiter zu reduzieren.

In der EP 0 808 803 A1 werden ein Verfahren und eine Vorrichtung zur kontinuierlichen Desintegration von belebtem Schlamm in einer Kläranlage oder Abwasserreinigungsanlage beschrieben, bei welchem der belebte Schlamm von Bakterien biologisch abgebaut und der daraus entstehende Schlamm in einem Behandlungsgefäß mit Ultraschall beaufschlagt wird, um die Zellwände der Mikroorganismen zu spalten. Das Verfahren beruht auf der Erkenntnis, daß eine wirksame und erfolgreiche Zerstörung der Zellwände des organischen Materials im belebten Schlamm erfolgt, wenn die UltraschallBehandlung gegen die Sedimentationsneigung des Klärschlamms im Behälter ansteigend gefördert wird. Die Ultraschall-Quelle, ein stabförmiger Ultraschall-Resonator, soll so angeordnet sein, daß der Klärschlamm diese umgibt und eine Kavitation erzeugt und die abgegebene Energie von der Wand des Behältnisses reflektiert wird. Die Beschallungs-Leistung wird mit 500 ... 1500 W für die Dauer einer bestimmten Beschallungszeit begrenzt angegeben. Es sind 10...20 Beschallungszyklen mit je 2...4 Minuten Beschallungszeit vorgesehen. Der Ultraschall wird in rechteckigen "Schallpaketen" im Bereich von 20...25 kHz erzeugt. Die Schallwellen setzen mit voller Leistung ein, werden für die bestimmte Zeit etwa kontinuierlich abgestrahlt und dann für eine kurze Pause eingestellt. Der Schlamm wird aus dem Becken kontinuierlich abgezogen, durch die Beschallungsvorrichtung geführt und dem Becken wieder zugeführt.

In der DE 42 05 739 A1 wird ein Verfahren zur Zerstörung der zellulären Struktur von Suspensionen von Mikroorganismen durch Einwirkung von Ultraschall auf die Suspension beschrieben, wobei die Zellstrukturen so zerstört werden, daß weitgehend nur noch die leeren Zellhüllen als absetzbare Stoffe übrig bleiben, während der größte Teil in mikrobiologisch abbaubare kolloidale Lösungen übergeht.

Bei allen bekannten Verfahren, die Ultraschall zur Behandlung der biologischen Abfälle vorschlagen, wird die Zerstörung der lebenden Zellen zur Grundlage der Behandlung gemacht, wobei die Zertörung weder ausreichend genau gesteuert noch in den Parametern reproduzierbar ist.

Aus der JP 10155477 A sind des weiteren ein Verfahren und eine Anordnung zum Abbau von Verseuchungsstoffen in Lösungen durch Mikroorganismen unter Verwendung von schwachen Ultraschall-Wellen bekannt. Dabei wird die verseuchte Lösung insgesamt mit schwachen Ultraschall-Wellen mit einer Intensität von ≤ 1 Watt/cm² beschallt. Durch die Beschallung werden die Mikroorganismen schwach angeregt und unterstützen den Abbau der Verseuchungsstoffe.

Bei den vorgeschlagenen Verfahren ist ein Ultraschall-Leistungseintrag für die gesamte zu behandelnde Menge vorgesehen, mit dem der als notwendig erachtete mechanische Zellaufschluß nicht gewährleistet werden kann. Der Leistungseintrag erfolgt zu wenig energiewirksam, dafür aber zu energieaufwendig.

Die US A 4,200,524 beschreibt ein Verfahren und eine Vorrichtung zum Abtrennen von Schlammteilen und Mikroorganismen von als Wachstumsstimulator verwendeten Bio-Oberflächen, beispielsweise aus Aktivkohle.

Zur Rückgewinnung der Aktivkohle wird in einer sogenannten "sluffing device" (Pumpe, Zentrifuge oder Ultraschall) mechanisch auf die Verbindung der Mikroorganismen mit der Bio-Oberfläche eingewirkt, um diese abzulösen.

Es wird im Vollstrom gearbeitet und es erfolgt keine gezielte direkte mechanische Einwirkung auf die Mikroorganismen.

Mit der EP 0 808 803 A1 wird ein verfahren zur kontinuierlichen Desintegration von belebtem Schlamm in einer Kläranlage oder Abwasserreinigungsanlage beschrieben, bei welchem der belebte Schlamm von Bakterien biologisch abgebaut und der daraus entstehende Schlamm in einem Behandlungs-Behältnis mit Ultraschall beaufschlagt wird, um die Zellwände der Mikroorganismen zu spalten.

Die Zellwände der in der Biomasse enthaltenen Zellen werden hierbei mittels Vollstromdesintegration zerstört.

Aufgabe der Erfindung ist es, ein gattungsgemäßes Verfahren zu entwickeln, mit denen die Nachteile des Standes der Technik vermieden werden und mit denen mit einem gegenüber bekannten Vorschlägen reduzierten Energie- und Ausrüstungsaufwand eine reproduzierbare effiziente Behandlung von biologischen Abfällen zur Reduzierung des organischen Trockenrückstandes und eine gegebenenfalls erhöhte Ausbeute an Biogas gewährleistet werden.

Die Lösung dieser Aufgabe ergibt sich aus den Merkmalen des Anspruchs 1. Danach wird von den zu behandelnden biologischen Abfällen eine definierte Teilmenge abgetrennt. Die abgetrennte Teilmenge wird in Abhängigkeit von der Art der zu behandelnden Zellen mit einer definierten Ultraschall-Leistung mit genau definierter hoher Intensität und Energiedichte und mit einer durch Nachregelung konstant gehaltenen Amplitude beaufschlagt. Überraschenderweise hat sich gezeigt, daß diese behandelte Teilmenge den unbehandelten Teil in dessen Stoffwechsel deutlich anregt, also biologisch aktiviert bzw. katalysiert. Es zeigt sich, daß diese Aktivierung im unmittelbaren Zusammenhang mit der Amplitude des Ultraschalls steht und einstellbar ist. Die Teilmenge mit den teilweise biologisch aktivierten Zellen wird in die nichtbeschallte Restmenge zurückgeführt, wodurch eine erhöhte biologische Aktivität in den Zellen der Gesamtmenge bewirkt wird.

Das Verfahren nach der Erfindung ist in einem breiten Spektrum zur Behandlung von biologischen Abfällen an-wendbar. Voraussetzung ist das Vorhandensein von lebenden Zellen (Mikroorganismen) in der zu behandelnden Substanz. Die Anwendung bezieht sich daher auf Belebtschlämme, Überschußschlamm, Faulschlamm oder dgl. in Abwasseranlagen. Die Erfindung kann aber auch zur Behandlung von kompostierbaren Abfällen und Gülle eingesetzt werden.

Durch den definierten, sehr genau reproduzierbaren und an die zu behandelnde Substanz angepaßten Ultraschall-Leistungseintrag mit genau definierter hoher Intensität und Energiedichte in eine definierte Teilmenge, der mit einer regelbaren und konstant gehaltenen Amplitude erfolgt, wird eine beschleunigte Aktivierung der Zellen und damit des gesamten Prozesses der Stabilisierung des biologischen Prozesses bewirkt. Die erzielten konstanten physikalischen Bedingungen, u.a. die definierte Beschleunigung der Flüssigkeit, sind die Voraussetzung der effizienten biologischen Aktivitäten, wie zum Beispiel die Anregung des Stoffwechsels der Zellen, die zudem durch die erreichte gleichmäßige Einwirkung über das Volumen und die Verwirbelung durch den Schalldruck unterstützt werden. Der optimale Eintrag des Ultraschalls erfolgt mit den bekannten Durchflußzellen, die eine definierte Zuführung der Flüssigkeit an die Sonotrode gewährleisten.

Der Aufschluß bzw. die Anregung der Zellen in der Teilmenge bewirkt erhöhte Aktivitäten der freigesetzten Enzyme auf die nichtbehandelten Zellen in der Gesamtmenge nach der Zusammenführung. Die Teilmenge des biologischen Abfalls wird durch den Energieeintrag in einen angeregten Zustand versetzt, der bei der Zusammenführung zu einer Kettenreaktion in der Gesamtmenge führt, die ebenfalls durch einen erhöhten Stoffwechsel biologisch aktiviert wird. Überraschenderweise wird durch die Beschallung einer definierten Teilmenge und deren Rückführung in die unbeschallte Menge eine größere Effizienz erzielt als bei einer Beschallung der Gesamtmenge. Durch ein Minimum an Zellenaufschluß bzw. Zellenanregung wird ein Maximum an Enzymwirksamkeit im Gesamtsystem erzielt. Bei erhöhten Temperaturen von vorzugsweise 30°C bis 40°C kann diese Aktivität noch gesteigert werden.

Die in der Gesamtmenge nur zu 3 bis 15% aufgeschlossenen bzw. biologisch angeregten Zellen, es werden die Zellwände "perforiert" und nicht völlig zerstört, bleiben funktionsfähig. Die durch Beschallung mit Ultraschall erzielte höhere Konzentration der freigesetzten Enzyme in der umgebenden Flüssigkeit und der daraus resultierende enzymatische Aufschluß bewirkt eine höhere biologische Aktivität der Zellen des Gesamtsystems. Die Enzymaktivität ist nach der Erfindung einstellbar und wird meßtechnisch erfaßt und danach geregelt.

Die erfindungsgemäße Vorrichtung ist **dadurch gekennzeichnet, daß** je nach der Art der biologischen Abfälle die Amplitude der Sonotrode im Bereich von 5 µm bis 100 µm so dimensioniert ist, daß die Amplitude der Sonotrode und damit der Energieeintrag pro Flächeneinheit optimal an den zu behandelnden Abfall angepaßt ist, wobei die Amplitude der Sonotrode gemessen und bei allen Belastungsbedingungen konstant geregelt ist. Die Amplituden und die damit erzielten Schalleistungsdichten sind deutlich größer als in den bekannten Verfahren, was zu einer Verringerung des Energieaufwandes gegenüber den bekannten Verfahren führt.

Es werden die folgenden Vorteile erzielt:
- Beschleunigung des Abbaus organischer Substanz sowohl bei anaeroben als auch aeroben Abbauprozessen,
- Erhöhung des Abbaus an organischer Substanz um mindestens 20%,
- Erhöhung der Biogasausbeute um mindestens 20% bei anaeroben Prozessen,
- Minimierung des Rückstandes bezüglich Gesamtfeststoffgehalt um mindestens 13%,
- Minimierung des zu entwässernden Reststoffes (z.B. Schlamm),
- Reduzierung der erforderlichen Entwässerungshilfsstoffe und der zu entsorgenden Reststoffe,
- Resultierend aus dem geringeren Zellaufschlußgrad ergibt sich für die Desintegration nur ein geringer Energieaufwand.

Zweckmäßige Ausgestaltungen der Erfindung sind in den Unteransprüchen angegeben.

Die Erfindung wird nachfolgend in Ausführungsbeispielen anhand einer Zeichnung näher erläutert. Es zeigen:
- Fig. 1 :: den schematischen Aufbau einer kommunalen Kläranlage mit Klär- schlammdesintegration und Schlamm- faulung und
- Fig. 2 :: die schematische Darstellung einer möglichen Einordnung der Desinte- gration in eine Anlage mit aerober Schlammstabilisierung.

Die folgenden Beispiele sind Anwendungsbeispiele für das Verfahren nach der Erfindung in unterschiedlichen Stadien der Abwasserbehandlung und bei der Kompostierung von biologischen Abfällen.

### Beispiel 1:

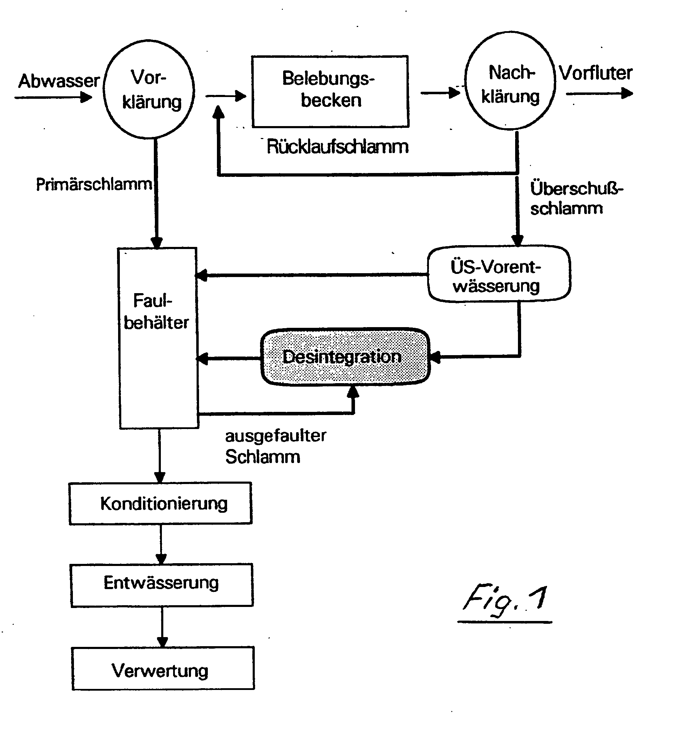

Entsprechend der Darstellung in der Fig. 1 wird das mechanisch vorgereinigte Abwasser in einer Belebtschlammanlage biologisch gereinigt und örtlich oder zeitlich getrennt nachgeklärt. Der anfallende Überschußschlamm wird einer Faulanlage zugeführt.

Nach der Erfindung wird aus dem voreingedickten Überschußschlamm eine Teilmenge von beispielsweise 30% abgezweigt und einer Vorrichtung zur Ultraschallbehandlung zugeführt. Die mit einem Energieeintrag von 40 kWs/l behandelte Teilmenge wird vor der Faulanlage mit dem unbehandelten Überschußschlamm vereinigt und nachfolgend in die Faulanlage gefördert (Fig. 1).

Die durch die Beschallung hervorgerufene erhöhte biologische Aktivität der gesamten Schlammzellen bewirkt einen zusätzlichen Abbau an organischer Substanz von 20% bei gleichzeitiger Erhöhung der Faulgasproduktion. Der Gesamtfeststoffgehalt des ausgefaulten Schlammes wird um ca. 13% reduziert. Nachgeschaltete Prozesse wie Faulschlammentwässerung und -entsorgung werden positiv beeinflußt und wirtschaftlicher.

### Beispiel 2:

Nach einer weiteren Ausführungsform der Erfindung wird der Belebtschlammanlage ein Vorklärbecken vorgeschaltet. Der dort anfallende Vorklärschlamm wird voreingedickt und getrennt vom Überschußschlamm ohne Ultraschallbehandlung in die Faulanlage gefördert. In der Faulanlage erfolgt die gemeinsame Faulung mit dem im Teilstrom ultraschallbehandelten sowie dem unbehandelten Überschußschlamm.

### Beispiel 3:

In einer dritten Ausführungsform erfolgt die Ultraschallbehandlung wie im Beispiel 1, der zu beschallende Überschußschlamm wird jedoch auf eine Temperatur von ca. 30°C vorgewärmt. Die dazu erforderliche thermische Energie wird aus dem erhöhten Faulgasanfall gewonnen. Die thermische Vorbehandlung des Schlammes bewirkt, daß die freigesetzten Enzyme noch schneller auf die nichtbehandelten Zellen einwirken können. Der anschließende Abbauprozeß in der Faulung wird so zusätzlich beschleunigt. Der weitere Abbau an organischer Substanz gegenüber herkömmlichen Faulprozessen wird um mindestens 30% gesteigert.

### Beispiel 4:

Wie in den Ausführungsbeispielen 1 und 2 beschrieben, wird der Überschußschlamm und der Vorklärschlamm in die Faulanlage gefördert, jedoch ohne daß ein Teilstrom des Überschußschlammes mit Ultraschall behandelt wird bevor er in die Faulanlage gelangt.

Die Erhöhung der biologischen Aktivität im Faulreaktor wird nach der Erfindung dadurch erzielt, daß ein Teilstrom Faulschlamm aus dem unteren Teil des Faulraumes abgezogen, mit einem Energieeintrag von 30 kWs/l ultraschallbehandelt und anschließend in den oberen Teil des Faulraumes zurückgeführt wird (Fig. 1). Die Fördermenge des Teilstromes beträgt beispielsweise 15% der täglichen Beschickungsmenge.

Durch die Beschallung werden direkt dem Faulprozeß angepaßte Enzyme freigesetzt, wodurch die biologische Aktivität der Schlammzellen noch schneller aktiviert wird. Der erhöhte Abbau an organischer Substanz erfolgt somit in noch kürzeren Reaktionszeiten als in den Beispielen 1 bis 3.

### Beispiel 5:

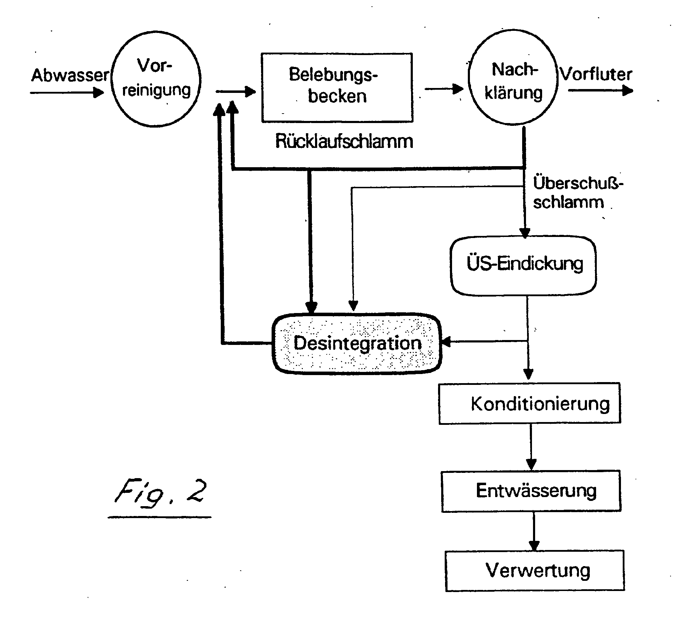

Das mechanisch vorgereinigte Abwasser wird in einer Belebtschlammanlage mit simultaner aerober Schlammstabilisierung biologisch gereinigt und örtlich oder zeitlich getrennt entsprechend der Darstellung in der Fig. 2 nachgeklärt.

Bevor der Rücklaufschlamm aus der Nachklärung in die Belebtschlammanlage rückgeführt wird, wird ein Teilstrom von beispielsweise 10% entnommen und in einer Vorrichtung zur Ultraschallbehandlung mit einem Energieeintrag von 10 kWs/l desintegriert. Der so behandelte Teilstrom wird mit dem unbehandelten Rücklaufschlamm vereinigt und nachfolgend in die Belebungsanlage gefördert.

Wie bereits im Beispiel 4 beschrieben wurde, werden dem aeroben Abbau angepaßte Enzyme freigesetzt, welche die biologische Aktivität des gesamten Belebtschlammes derart stimulieren, daß ein verstärkter Abbau der Biomasse zu verzeichnen ist. Der anfallende Überschußschlamm kann so um ca. 30% verringert werden.

### Beispiel 6:

Bei der anaeroben Kompostierung werden durch Vergärung von organischem Material unter Luftabschluß Biogas und kompostähnliche Reststoffe hergestellt. Das zu kompostierende organische Material wird in einem Auflösebehälter unter Zugabe von Wasser hydrolysiert bzw. angemaischt und dem Methanreaktor zur Vergärung zugeführt. Nach einer Vergärung von ca. 12 Tagen werden nicht abgebaute Feststoffe abgetrennt und einer aeroben Nachrotte zugeführt.

Ein Teilstrom von 20% der zu vergärenden Suspension wird vor Zugabe in den Reaktor mittels Ultraschalltechnik bei einem spezifischen Energieeintrag von 20 kWs/l desintegriert. Die damit verbundene Freisetzung von Enzymen begünstigt das aerobe Abbauverhalten, der Anteil an nicht abgebautem organischen Material kann um 25% reduziert werden. Der erhöhte Abbau ist mit einer erhöhten Biogasbildung von 25% verbunden, das zu einer zusätzlichen Stromerzeugung oder Wärmegewinnung genutzt werden kann. Der erhöhte Abbau an organischem Material während der anaeroben Phase hat weiterhin zur Folge, daß der Anteil an aerob nachzubehandelndem Material reduziert wird.

### Beispiel 7:

Bei einer Anlage zur aeroben Kompostierung wird mit Gülle kompostiert, die aufgrund des hohen Wassergehaltes von ca. 98% zum Teil gleichzeitig zur Bewässerung der Mieten dient.

Von der zur Bewässerung genutzten Menge wird eine Teilmenge von 25% bei einem spezifischen Energieeintrag von 10 kWs/l mittels Ultraschall behandelt und anschließend mit der unbehandelten Menge vermischt. Durch die Zusammenführung wird der Stoffwechsel in der Gesamtmenge aktiviert, was durch eine erhöhte Enzymaktivität zum Ausdruck kommt. Das erzeugte Güllegemisch wird gleichmäßig auf die vorhandenen Mieten verteilt. Die bereits in den Mieten vorhandenen Mikroorganismen werden so ebenfalls angeregt und bewirken einen erhöhten biologischen Abbau des zu kompostierenden Materials. Das Resultat der Behandlung ist eine Reduzierung der sonst üblichen Rottezeit um 25%.

Die Erfindung ist nicht auf die hier beschriebenen Ausführungsformen beschränkt. Vielmehr ist es möglich, durch Kombination der Merkmale weitere Ausführungsbeispiele zu realisieren, ohne den Rahmen der Erfindung zu verlassen.

## Patentansprüche

1. Verfahren zur Behandlung von biologischen Abfällen, die lebende Mikroorganismen enthalten, unter Verwendung von Ultraschall, wobei
- von den biologischen Abfällen eine definierte Teilmenge abgetrennt wird,
- in die Teilmenge in Abhängigkeit von der Art der zu behandelnden Zellen Ultraschall-Leistung eingetragen wird,
- die beschallte Teilmenge in die nicht-beschallte Restmenge zurückgeführt wird,
**dadurch gekennzeichnet, dass**
- der Grad der Aktivierung der biologisch wirksamen Zellen in der Teilmenge durch die Amplitude eingestellt wird derart, dass die Zellwände der behandelten Zellen perforiert werden und funktionsfähig bleiben,
- die Amplitude der in die Teilmenge eingetragenen Ultraschall-Leistung gemessen und bei allen Belastungsbedingungen im Bereich von 5 µm bis 100 µm konstant geregelt wird und
- die Rückführung der Teilmenge in die nicht-beschallte Restmenge nach der Zusammenführung eine erhöhte biologische Aktivität in den Zellen der Gesamtmenge realisiert.

2. Verfahren nach Anspruch 1,
**dadurch gekennzeichnet, dass** von der Gesamtmenge der biologischen Abfälle 5% bis 45 %, vorzugsweise 30 %, als Teilmenge abgezweigt werden, dass 5 % bis 50 %, vorzugsweise 20 %, der biologisch wirksamen Zellen in der Teilmenge durch Ultraschall biologisch aktiviert werden, so dass in der Ausgangsgesamtmenge nach der Zusammenführung 3 % bis 15 % der biologisch wirksamen Zellen in ihrem Stoffwechsel angeregt werden, dass in die Teilmenge 1 kWs/l bis 100 kWs/l, vorzugsweise 15 kWs/l bis 30 kWs/l, Ultraschall-Leistung mit konstanter Amplitude bei einer erhöhten Temperatur der biologischen Abfälle von 3°C bis 55°C, vorzugsweise 30°C bis 40°C, eingetragen werden.

3. Verfahren nach den Ansprüchen 1 oder 2,
**dadurch gekennzeichnet, dass** die Ultraschall-Leistung kontinuierlich in die Teilmenge während der Verweilzeit eingebracht wird.

4. Verfahren nach Anspruch 1 oder 3,
**dadurch gekennzeichnet, dass** die Ultraschall-Leistung während der Verweilzeit mit der konstanten Amplitude von 5 µm bis 100 µm mit genau definierter Intensität von 3 W/cm² bis 150 W/cm², vorzugsweise von 30 W/cm² bis 80 W/cm², eingebracht wird.

5. Verfahren nach einem der Ansprüche 1 bis 4,
**dadurch gekennzeichnet, dass** die abgezweigte Teilmenge der biologischen Abfälle durch Glasrohre geleitet und die Ultraschall-Leistung über kurze Sonotroden mit hoher Schallintensität eingebracht wird.

6. Verfahren nach einem der Ansprüche 1 bis 5,
**dadurch gekennzeichnet, dass** zur Einstellung der biologischen Gesamtaktivität Enzyme extern zugeführt werden.

## Claims

1. Process for treating biological wastes containing living microorganisms by using ultrasound, wherein
- a defined partial quantity is separated from the biological wastes,
- ultrasound energy is introduced into the partial quantity, depending on the type of cells to be treated,
- the partial quantity treated with ultrasound is returned to the residual quantity not treated with ultrasound,
**characterized in that**
- the degree of activation of the biologically active cells in the partial quantity is adjusted via the amplitude such that the cell walls of the treated cells are perforated and remain functional,
- the amplitude of the ultrasound energy introduced into the partial quantity is measured and is controlled under all load conditions to a constant value in a range of 5 µm to 100 µm, and
- the return of the partial quantity into the residual quantity not treated with ultrasound provides, after combination, an increased biological activity in the cells of the total quantity.

2. Process according to claim 1,
**characterized in that** from the total quantity of the biological wastes 5 % to 45 %, preferably 30 %, are diverted as partial quantity, that 5 % to 50 %, preferably 20 %, of the biologically effective cells in the partial quantity are biologically activated by ultrasound, so that in the total starting quantity 3 % to 15 % of the biologically effective cells are stimulated in their metabolism after the combination, that ultrasound energy of 1 kWs/l to 100 kWs/l, preferably 15 kWs/l to 30 kWs/l, with constant amplitude is introduced into the partial quantity at an elevated temperature of the biological wastes of 3 °C to 55 °C, preferably 30 °C to 40 °C.

3. Process according to claim 1 or 2,
**characterized in that** the ultrasound energy is introduced continuously into the partial quantity during the residence time.

4. Process according to claim 1 or 3,
**characterized in that** the ultrasound energy is introduced during the residence time at a constant amplitude of 5 µm to 100 µm with a precisely defined intensity of 3 W/cm² to 150 W/cm², preferably of 30 W/cm² to 80 W/cm².

5. Process according to one of the claims 1 to 4,
**characterized in that** the diverted partial quantity of the biological wastes is transported through glass tubes and the ultrasound energy is introduced by short sonotrodes having high acoustic energy.

6. Process according to one of the claims 1 to 5,
**characterized in that** enzymes are externally added for adjusting the overall biological activity.

## Revendications

1. Procédé de traitement des résidus d'origine biologique contenant des micro-organismes vivants en utilisant des ultrasons, dans lequel
- une quantité partielle définie est séparée des résidus biologiques,
- de la puissance ultrasonore est introduite dans la quantité partielle en fonction du type des cellules à traiter,
- la quantité partielle irradiée est réintroduite dans la quantité restante non irradiée,
**caractérisé en ce que**
- le degré de l'activation des cellules biologiquement efficaces se trouvant dans la quantité partielle est réglé par l'amplitude de telle manière que les parois cellulaires des cellules traitées soient perforées et restent en état de fonctionner,
- l'amplitude de la puissance ultrasonore introduite dans la quantité partielle est mesurée et réglée de manière constante sous toutes les conditions de charge comprises dans la plage de 5 µm à 100 µm, et
- la réintroduction de la quantité partielle dans la quantité restante non irradiée réalise une activité biologique augmentée dans les cellules de la quantité totale après l'union.

2. Procédé selon la revendication 1,
**caractérisé en ce que** 5 % à 45 %, de préférence 30 %, de la quantité totale des résidus biologiques sont prélevés en tant que quantité partielle, que 5 % à 50 %, de préférence 20 %, des cellules biologiquement efficaces se trouvant dans la quantité partielle sont activées biologiquement par ultrasons de sorte que le métabolisme de 3 % à 15 % des cellules biologiquement efficaces est stimulé dans la quantité totale de base après l'union, qu'une puissance ultrasonore de 1 kWs/l à 100 KwS/l, de préférence de 15 kWs/l à 30 kWs/l est introduite dans la quantité partielle avec une amplitude constante, lors d'une température des résidus biologiques de 3 °C à 55 °C, de préférence de 30 °C à 40 °C.

3. Procédé selon les revendications 1 ou 2,
**caractérisé en ce que** la puissance ultrasonore est introduite de manière continue dans la quantité partielle pendant le temps du séjour.

4. Procédé selon les revendications 1 ou 3,
**caractérisé en ce que** la puissance sonore est introduite avec l'amplitude constante de 5 µm à 100 µm et avec une intensité précisément définie de 3 W/cm² à 150 W/cm², de préférence de 30 W/cm² à 80 W/cm^{2,} pendant le temps du séjour.

5. Procédé selon l'une des revendications 1 à 4,
**caractérisé en ce que** la quantité partielle des résidus biologiques séparée est guidée par des tubes en verre et que la puissance ultrasonore est introduite par des sonotrodes courtes avec une forte intensité sonore.

6. Procédé selon l'une des revendications 1 à 5,
**caractérisé en ce que** des enzymes sont amenées extérieurement pour régler l'activité biologique totale.
